# EUROPEAN PATENT SPECIFICATION

(11) **EP 1 022 959 B1**
(45) Date of publication and mention of the grant of the patent: **28.01.2004**
(21) Application number: 98948974.5
(22) Date of filing: 10.09.1998
(51) Int. Cl.: A23L 1/212, A23L 1/0524

(54) **PROCESS FOR PREPARING A TOMATO-BASED PRODUCT WITH PECTIN METHYLESTERASE AND ADDED HYDROCOLLOID**
VERFAHREN ZUR HERSTELLUNG VON LEBENSMITTELPRODUKTEN AUF TOMATENBASIS MIT PEKTIN METHYLESTERASE UND ZUGESETZTEM HYDROKOLLOID
PROCEDE DE PREPARATION D'UN PRODUIT A BASE DE TOMATES COMPORTANT DE LA PECTINE METHYLESTERASE ET UN HYDROCOLLOIDE AJOUTE

(30) Priority: 10.10.1997 EP 97308019
(43) Date of publication of application: 02.08.2000
(73) Proprietor: UNILEVER N.V., 3013 AL Rotterdam (NL); UNILEVER PLC, London EC4P 4BQ (GB)
(72) Inventor: GIDLEY, Michael, John, Unilever Research Colworth, Bedford MK44 1LQ (GB); GOTHARD, Michelle, Gina, Elizabeth, Bedford MK44 1LQ (GB); WHITEMAN, Sally-Anne, Unilever Research Colworth, Bedford MK44 1LQ (GB)
(74) Representative: Wurfbain, Gilles L.
(86) International application number: PCT/EP1998/005858
(87) International publication number: WO 1999/018813

(56) References cited:
- EP-A- 0 808 578
- WO-A-94/12055
- WO-A-97/10726
- WO-A-97/10727
- WO-A-97/38592

## Description

### Field of the Invention

The present invention relates to a process for the preparation of fruit- or vegetable-based products of high quality and consistency and to products obtained by this process.

### Background to the Invention

The texture of fruit- and vegetable-based products, such as purees and pastes, is usually considered to be a key determinant of their eating quality. Purees and pastes are prepared from whole fruit and vegetables by a combination of comminution and heating; the process conditions used are dependent on the raw material and the desired product attributes such as particle size, consistency and storage stability.

It is desirable to be able to produce fruit- or vegetable-based products having a high consistency (i.e. not too watery and/or thin) and quality with a low solids content.

It is also desirable to be able to produce fruit- or vegetable-based products having a fresh, rather than a processed, flavour and/or aroma profile.

Fruits and vegetables contain pectins which are found in cell walls and comprise polygalacturonic acids esterified by methoxyl groups. Pectins are classified in accordance with the degree of esterification: pectins having greater than 50% esterification are called high-methoxylated pectins; pectins having less than 50% esterification are called low-methoxylated pectins.

Enzymes, such as polygalacturonase (PG) and pectinmethylesterase (PME), are naturally-present in fruit and vegetables. When a fruit or vegetable is comminuted, these enzymes are released and PME catalyses the removal of methyl ester groups from pectin, thereby producing pectic and pectinic acids which can associate with each other via cation cross-links to form a gel-like structure. However, PG rapidly depolymerises these pectic and pectinic acids, thereby offsetting any viscosity increase resulting from gelling. Consequently, the resulting product has a thin and watery consistency.

EP 0624062 discloses adding PME to crude or pretreated fruits or vegetables containing high-methoxylated pectin; this demethoxylates the high-methoxylated pectin to form low-methoxylated pectin which gelifies with added or naturally present calcium ions.

PCT/EP97/01401 discloses that the reaction of PME with hot break tomato paste can be controlled such that a thickened but not substantially gelled product is obtained.

However, not all tomato pastes react with PME to give an increase in consistency, these are the so-called 'PME-insensitive' tomato pastes, among which are cold-break tomato pastes. EP 97306802.6 discloses that a desirable increase in consistency can be obtained from such 'PME-insensitive' pastes by incubating the paste in the presence of both pectin and PME. This document also discloses that an increase in consistency without gelling can be achieved in such a process either by controlling the time, temperature, and enzyme doses used, and/or by controlling the level of pectin added.

The reaction of PME with tomato pastes (with or without the addition ot pectin) involves an initial increase in consistency which is generally considered beneficial, which, if the PME is not inactivated, is followed by a gelation of the material which is generally not beneficial as the texture is considered to be too solid. Breaking this solid material down into a paste-like consistency results in the undesirable production ot a watery phase which may separate from the paste. This feature is conveniently measured using a standard blotter test in which serum separation from a paste is measured. It is an object of this invention to provide a method for obtaining a high consistency tomato product with a low solids content and low serum separation by comminution of a PME-gelled paste.

Also, when the thickening using PME or PME and pectin is not allowed to proceed until the gelled phase occurs, further reduction in a standard blotter test score, without gelling, can be desired.

### Summary of the Invention

Hence, there is a need for a process for the preparation of tomato products of high quality and consistency, and for products obtained by this process. Such products should preferably not have a watery and unconsistent phase. It is desired that the tomato paste should have at a Brix value of 10 or less a blotter value of less than 5 mm when the G' value is less than 900 Pa, and a blotter value of less than 10 mm when the G' value is more than 900 Pa.

According to the present invention there is provided a process for preparing a high consistency tomato-based product with a low solids content and low serum separation comprising comminution of a PME-gelled paste by
a) adding a source containing pectinmethylesterase to a tomato paste, and in the case said tomato paste is PME-insensitive, also adding pectin thereto;
b) incubating the paste/PME/pectin mixture;
c) optionally inactivating the PME;
d) adding a hydrocolloid and mixing

### Detailed description of the invention

In the process as set out above, the added pectin and pectinmethylesterase are preferably substantially free from pectin depolymerising enzymes such as pectin lyases and polygalacturonases.

A tomato paste is, for example, chopped, diced, comminuted or macerated tomato. It therefore includes tomato pieces having a size in the range of from approximately 10 µm (microns) to approximately 3cm.

A PME-sensitive paste is one which shows an increase in viscosity of greater than 1000 Pa in G' (storage modulus) value at 12°Brix when about 265 units of PME activity are added to 100g of paste.

A PME-insensitive paste is one which shows an increase in viscosity of less than 1000 Pa in G' value at 12°Brix when about 265 units of PME activity are added to 100g of paste.

An intermediate inactivation step is optional: for example, if a desired consistency is reached at the time that the reaction has reached effective completion (as judged by a plateau in G' value) then a final inactivation step is not required; however, if the reaction has not reached effective completion at the time that the desired consistency has been reached, the PME is inactivated to prevent any further increase in consistency.

The process conditions for the PME reaction are chosen such that the paste either substantially increases in consistency or gels.

The hydrocolloid may be chosen from starch and derivatives, cellulose derivatives, pectin, alginate, carrageenan, agar, gelatin , gellan, guar gum, locust bean gum, casein, and related materials such as sera from fruit or vegetable pastes. The hydrocolloid is preferably addded in the form of an aqueous solution or suspension. Water-soluble hydrocolloids are preferred. Although the hydrocolloid can be added in the final stage of processing, it is also possible to add it at any earlier stage, e.g. together or prior to adding the PME(pectin).
The controlled addition of PME may be achieved by titrating a solution of PME extract into the tomato paste or adding PME extract in the form of a powder. Using an extract of PME allows control of the amount of PME added, since it is assayable. Also, it is easily dosed. Hence, the level of PME activity in the paste is easily pre-determined.

A suitable source for PME is any vegetable or fruit from which it can be extracted. For example, green beans, snap beans, potatoes, cauliflowers, sour cherries, green tomatoes, green peppers, oranges, apples, bananas, pears, turnips, onions, garlic and mixtures thereof. Immature fruit and vegetables are preferred. Particularly preferred sources are green tomatoes, green peppers, green beans and snap beans.

The most preferred source of PME is green tomatoes, as they contain high levels of PME and insignificant (ie undetectable) levels of PG.

PME may be extracted from green tomatoes by stabilising green tomatoes or pieces thereof and extracting pectin methylesterase therefrom. The stabilised green tomatoes and pieces thereof are ambient stable and convenient to use. Preferably, the extract of PME is a solution or powder for practical and controlled dosing into paste.

The pectin may be sourced from fruit, vegetables and mixtures thereof. It is preferably sourced from tomatoes, apples or citrus fruits. It may be added in the form of a serum extracted from a fruit or vegetable paste which is PME-sensitive. It may also be added as a solid or a solution of pre-extracted pectin obtained from commercial suppliers.

The pectin and the PME extract are added to the paste, optionally with any other ingredients. The mixture is then incubated to activate the enzyme and allow it to demethoxylate the added pectin, resulting in an increase in viscosity. Different pastes take different lengths of time to respond to the same amount of PME activity at the same temperature of incubation. Once the desired consistency (thickness) has been achieved, the PME is optionally inactivated by, for example, heating, adjusting pH, and/or adding inhibitors. If heating is used, the temperature is typically raised to 90°C for 10 minutes.

The tomato paste prepared using the process of the present invention can be sold as it is, or can be used as the ingredient of products, such as sauces, ketchup, pizza toppings and soups.

Preferably a tomato paste prepared in accordance with the present invention at a Brix value of 10 or less has a blotter value of less than 5 mm when the G' value is less than 900 Pa, and a blotter value of less than 10 mm when the G' value is more than 900 Pa.

### Examples:

### Addition of hydrocolloids to PME-thickened hot break tomato paste and control of syneresis.

### Abbreviations

PME - pectin methylesterase
D.E. - degree of esterification.
HB - hot break (tomato paste)

### Methods

### 1. Preparation of PME-containing extracts:

Mature green tomatoes (without any signs of colour change) were harvested. The tomatoes were quartered and the seeds and locular contents removed. The pericarp tissue was either used immediately or frozen in liquid nitrogen and stored at -20°C until required for use. A known weight of pericarp was taken and an equal volume of 2M NaCl was added (i.e. if 100g pericarp was taken, then 100ml of salt solution was used). The pericarp was homogenised in a blender, stirred at 4°C for 2 hours and centrifuged (27,000 x *g*, 30 minutes, 4°C). The supernatant was collected and strained through muslin. The supernatant (i.e. the PME extract) was stored at -20°C in small aliquots until required. The PME activity of the pericarp salt extract was determined by titration of a 1% pectin solution with 25 mM NaOH at pH 7.5 and 30°C. Units of activity are expressed as mmoles COO⁻ generated/min. The activity of the different doses used in the experiments described are shown in the Table 1 below:

**Table 1:**

| Dose and activity of PME extract | |
|---|---|
| % dose PME per 100g paste mixture | PME activity (mmoles COO⁻/min) |
| 0.5 | 53 |
| 1.0 | 106 |
| 1.5 | 159 |
| 2.0 | 212 |
| 2.5 | 265 |

### 2. Preparation of paste samples

HB tomato paste (ex Copais) was incubated at room temperature for 3 hours with either 1.5% or 2.5% PME extract. In the presence of 1.5% PME extract under these conditions, the paste thickened but did not gel, in the presence of 2.5% PME extract the paste formed a gel. The reaction was then terminated in a retort by heating to 95°C for 10 min.

The PME-treated pastes were mixed with either water or with a solution of various hydrocolloids, as listed below, in three different ratios (80:20, 70:30, 60:40 paste:solution).
37% D.E. commercial pectin (1% stock solution)
67% D.E. commercial pectin (1% stock solution)
Avicell microcrystalline cellulose (1% stock suspension)
Carboxymethylcellulose (1% stock solution)
Maltodextrin (low D.E., high Mᵣ) (10% stock solution)
Pre-gelatinised waxy maize starch (3% stock solution)
Concentrated hot break tomato paste serum (approximately 8-fold concentrated from serum of 12° Brix paste)

The appropriate amount of PME-treated paste was weighed out and the hydrocolloid solution/water mixed in by hand. Following this, the mixture was pushed through a 710µm (microns) brass sieve. For example, for the 2.5% PME-treated paste with 67% D.E. pectin in the ratio 70:30, 70g of paste was mixed with 30ml of a 1% solution of the pectin.

The effect of the various treatments was measured by small deformation rheology (frequency sweep, with the G' values at 10rad s⁻¹ being compared), blotter and °Brix.

### 3. General measurement techniques:

°*Brix measurements* - These values reflect the content of soluble sugars in the serum fraction by determination of refractive index. The measurements were made using a Bellingham and Stanley Ltd RFM 320 Refractometer, calibrated against distilled water. A sample of tomato paste was squeezed through filter paper and two or three drops of serum placed on the measurement surface of the refractometer. The value measured by the Refractometer was recorded.

*Blotter tests* - These measurements reflect the amount of syneresis present in the samples, that is, the amount of watery liquid which separates from the main body of the paste. From each sample, 7 ml of pastes was aspirated into a plastic syringe and was carefully transferred into the central circle of a half-hour blotter test card (Bridge and Company, Chancery Lane, London). The test card was placed on top of an upright plastic beaker, and after half an hour the distance (in millimetres) migrated by the serum of the tomato paste was recorded along each of the four axes. Two blotter tests were carried out for each sample, and the four values were averaged. The larger the blotter value, the greater the level of syneresis present in the sample. In general, for a paste of 12°Brix a Blotter score of 5 or less would be considered acceptable, but values greater than this make the pastes unacceptable.

*Small deformation rheology* - This measurement gives a value to the solid-like component of the paste, which relates to the perceived thickness or viscosity. A small amount of tomato paste mixture (approximately 3 g) was placed between parallel plates on a Rheometrics RDA2 (5cm diameter, roughened by attachment of emery paper to plate surfaces to reduce slippage or surface friction phenomena). Frequency sweep measurements were made from 0.5 -200 radian per second (rads⁻¹), at 0.5% strain and at 30°C. G' values were taken from the 10 rads⁻¹ measurement. Time sweep measurements were made at 0.5% strain, 10 rads⁻¹ and 30°C. All samples were sealed with liquid paraffin to avoid desiccation or water exchange.

*Bostwick measurements* - Bostwick measurements are another way of quantifying the thickness or viscosity of tomato paste. These were made in a standard Bostwick viscometer. Paste was placed in the chamber of the levelled Bostwick, the shutter opened and the timing clock started. The distance (in centimetres) over which the paste flowed in 30 seconds was recorded. Pastes with a low Bostwick value have a high viscosity and *vice versa.*

### Comparative Example

Hot break paste (ex Copais) was diluted to 12°Brix and then incubated for three hours at room temperature with a range of doses of PME extract from 0 to 2.5% (v/w). After the incubation period, the Bostwick and Blotter values were measured. Table 2 depicts the results, where it can be seen that the Bostwick values decrease slightly up to a dose of 1.5% PME extract, but at higher doses the Bostwick values are very small (i.e. the mixture has gelled). For the Blotter values, these decrease to a minimum at 1.5% added PME extract, but at levels above 1.5% PME extract where the paste has gelled the Blotter values are unacceptably high. The appearance of the pastes that have gelled, and then been disrupted is that of a pulpy structure, with undesirable syneresis on standing.

**Table 2 :**

| Comparative example 1 - Effect of PME dosage on HB paste - Bostwick and Blotter values | | |
|---|---|---|
| % PME added | Bostwick (cm) | Blotter (mm) |
| 0 | 3.3 | 8.3 |
| 0.5 | 3.1 | 7 |
| 1.0 | 3.4 | 6.1 |
| 1.5 | 2.8 | 2.6 |
| 2.0 | 0.3 | 17.2 |
| 2.5 | 0.2 | 18.8 |

### Example 1.

In this example, HB paste was allowed to gel by treatment with 2.5% PME extract for 3 hours at room temperature, and then stabilised by retort treatment. The gelled paste was then mixed with the various hydrocolloids in the ratio of 70% paste to 30% solution. Table 3 shows the data for small deformation rheology, Blotter and °Brix values. It can be seen that if the gelled paste is mixed with water, then the Blotter score is very high, but that the Blotter scores can be reduced to acceptable levels with addition of soluble hydrocolloids. The greatest reduction in Blotter score is brought about by addition of 67% D.E. pectin, pregelatinised waxy maize starch or hot break serum. Addition of an insoluble hydrocolloid such as Avicell cellulose did not reduce the Blotter score as much.

The appearance of the pastes with added soluble hydrocolloids was that of an evenly suspended continuous material, with no obvious syneresis. This was in contrast to the water only control and the Avicell cellulose addition, where the paste settled out of suspension, leaving an unattractive watery upper layer clearly visible.

**Table 3:**

| The effects of adding various hydrocolloid solutions to paste treated with 2.5% PME in the ratio of 70:30 (paste:solution) | | | |
|---|---|---|---|
| Hydrocolloid | G' ( Pa, 10 rad s⁻¹) | °Brix | Blotter (mm) |
| Commercial pectin (37% D.E.) | 1148.5 | 9.52 | 11.5 |
| Commercial pectin (67% D.E.) | 1012.6 | 9.57 | 6 |
| Avicell cellulose | 1100.5 | 9.4 | 15.75 |
| Carboxymethyl cellulose | 1056.9 | 9.63 | 8 |
| Maltodextrin | 1105.8 | 13.07 | 10.25 |
| Pre-gelatinised waxy maize starch | 1115.8 | 10.96 | 2 |
| Concentrated hot break serum | 1591.5 | 16.54 | 6.25 |
| Water | 644.5 | 9.23 | 19 |

### Example 2

In this example, HB paste was allowed to thicken by treatment with 1.5% PME extract for 3 hours at room temperature, and then stabilised by heat inactivation treatment. The thickened paste was then mixed with the various hydrocolloids in the ratio of 70% paste to 30% solution. Table 4 shows the data for small deformation rheology, Blotter and °Brix values. In this example, the control Blotter values are lower than that of the gelled paste (see Comparative Example 1, Table 2), but as for Example 1 (Table 3) the addition of soluble hydrocolloids reduced the Blotter scores significantly. In some cases a paste with zero Blotter score was obtained (67% D.E. pectin and maltodextrin, for example). In all cases, the appearance of the pastes with added soluble hydrocolloids was improved over the water control. Most notably, the appearance of the pastes with very low or zero Blotter scores (e.g. with 67% D.E. pectin or HB serum) was very good, being very smooth, continuous and very glossy.

**Table 4:**

| The effects of adding various hydrocolloid solutions to 1.5% PME paste in the ratio of 70:30 (paste:solution) | | | |
|---|---|---|---|
| Hydrocolloid | G' (Pa, 10 rad s⁻¹) | °Brix | Blotter (mm) |
| Commercial pectin (37% D.E.) | 740.89 | 9.85 | 0.25 |
| Commercial pectin (67% D.E.) | 800.98 | 9.88 | 0 |
| Avicell cellulose | 783.1 | 9.58 | 4.25 |
| Carboxymethyl cellulose | 786 | 9.9 | 1 |
| Maltodextrin | 745.74 | 13.25 | 0 |
| Pre-gelatinised waxy maize starch | 818.46 | 11.34 | 0.25 |
| Concentrated hot break serum | 830.57 | 16.46 | 0.5 |
| Water | 780.6 | 9.47 | 4.5 |

### Example 3

In this example, the amount of paste and added hydrocolloid is varied from 80% paste to 60% paste, and then either 67% D.E. pectin, hot break serum or water added. Table 5 shows the data for small deformation rheology, Blotter and °Brix for these pastes. It can be seen that addition of either pectin or HB serum significantly reduces the Blotter scores at all three dilutions of paste. The appearance of these pastes was generally very good being smooth and glossy. The best mixtures were the 80:20 and 70:30 paste:solution ratios. It was noted for the 60:40 paste:solution that after prolonged standing there were some signs of separation, with a watery layer appearing on top.

**Table 5:**

| Effect of pectin or HB serum addition to paste treated with 2.5% PME and diluted in different ratios | | | | |
|---|---|---|---|---|
| Hydrocolloid added | Ratio of paste:hydrocolloid solution | Measurement | | |
| | | G' (Pa, 10 rad s⁻¹) | °Brix | Blotter (mm) |
| 67% D.E. pectin | 80:20 | 1610.3 | 10.84 | 4.25 |
| | 70:30 | 1012 | 9.57 | 6 |
| | 60:40 | 657 | 8.68 | 9.25 |
| HB serum | 80:20 | 2157 | 15.42 | 4.25 |
| | 70:30 | 1591 | 16.54 | 6.25 |
| | 60:40 | 867.1 | 17.5 | 8.5 |
| Water | 80:20 | 1817.7 | 10.91 | 11.5 |
| | 70:30 | 644 | 9.23 | 19 |
| | 60:40 | 588.3 | 7.83 | 24 |

## Claims

1. A process for preparing a high consistency tomato-based product with a low solids content and low serum separation comprising comminution of a PME-gelled paste by
a) adding a source containing pectinmethylesterase to a tomato paste, and in the case said tomato paste is PME-insensitive, also adding pectin thereto
b) incubating the paste/PME/pectin mixture;
c) optionally inactivating the PME
d) adding a hydrocolloid and mixing.

2. Process according to claim 1, wherein the added pectin and pectin methylesterase are substantially free from pectin depolymerising enzymes.

3. Process according to claim 1 or 2, wherein, at the end of the process, the blotter value of a paste having a Brix value < 10 and G' > 900 Pa is < 10 mm.

4. Process according to claim 1 or 2, wherein, at the end of the process, the blotter value of a paste having a Brix value < 10 and G' < 900 Pa is < 5 mm.

5. Process according to any of claims 1-4 wherein the pectinmethylesterase is sourced from a vegetable, fruit or mixture thereof.

6. Process according to any of claims 1-5 wherein the pectin is sourced from a vegetable, fruit or mixture thereof.

7. Process according to claim 6 wherein the pectin is in the form of a serum extracted from a pectinmethylesterase-sensitive fruit or vegetable paste.

8. Process according to any of claims 1-7, wherein the hydrocolloid is chosen from starch and derivatives thereof, cellulose derivatives, pectin, alginate, carrageenan, agar, gelatin, gellan, guar gum, locust bean gum, casein, and related materials such as sera from fruit and vegetable pastes.

9. Process according to any of claims 1-8, wherein the hydrocolloid is a pectin-containing hydrocolloid.

10. Process according to claim 9, wherein the pectin-containing hydrocolloid is obtained from a tomato paste serum.

## Patentansprüche

1. Verfahren zum Herstellen eines auf Tomaten basierenden Produkts mit hoher Konsistenz, mit einem niedrigen Feststoffgehalt und niedriger Serumtrennung, umfassend Zerkleinern einer PME-gelierten Paste durch
a) Zugeben einer Pektinmethylesterase enthaltenden Quelle zu einer Tomatenpaste und wenn die Tomatenpaste PME-unempfindlich ist, ebenfalls Zusetzen von Pektin dazu
b) Inkubieren des Paste/PME/Pektin-Gemisches;
c) gegebenenfalls Inaktivieren der PME
d) Zusetzen eines Hydrokolloids und Vermischen.

2. Verfahren nach Anspruch 1, wobei das zugegebene Pektin und die zugegebene Pektinmethylesterase im Wesentlichen frei von Pektin depolymerisierenden Enzymen sind.

3. Verfahren nach Anspruch 1 oder 2, wobei am Ende des Verfahrens der Blotterwert einer Paste mit einem Brixwert < 10 und G' > 900 Pa < 10 mm ist.

4. Verfahren nach Anspruch 1 oder 2, wobei am Ende des Verfahrens der Blotterwert einer Paste mit einem Brixwert < 10 und G' < 900 Pa < 5 mm ist.

5. Verfahren nach einem der Ansprüche 1 bis 4, wobei die Pektinmethylesterase aus einem Gemüse, Obst oder Gemisch davon stammt.

6. Verfahren nach einem der Ansprüche 1 bis 5, wobei das Pektin aus einem Gemüse, Obst oder Gemisch davon stammt.

7. Verfahren nach Anspruch 6, wobei das Pektin in Form eines Serums, das aus einer auf Pektinmethylesterase empfindlichen Obst- oder Gemüsepaste extrahiert ist, voeliegt.

8. Verfahren nach einem der Ansprüche 1 bis 7, wobei das Hydrokolloid aus Stärke und Derivaten davon, Cellulosederivaten, Pektin, Alginat, Carrageenan, Agar, Gelatine, Gellan, Guargummi, Johannisbrotbaumgummi, Kasein und verwandten Materialien, wie Seren von Obst- und Gemüsepasten ausgewählt wird.

9. Verfahren nach einem der Ansprüche 1 bis 8, wobei das Hydrokolloid ein Pektin enthaltendes Hydrokolloid ist.

10. Verfahren nach Anspruch 9, wobei das Pektin enthaltende Hydrokolloid aus einem Tomatenpastenserum erhalten wird.

## Revendications

1. Procédé de fabrication d'un produit à base de tomate de consistance élevée avec une faible teneur en matière sèche et une séparation en sérum faible comprenant le broyage d'une pâte gélifiée avec de la PME par
a) addition d'une source contenant de la pectine méthylestérase à une pâte de tomate, et dans le cas où ladite pâte de tomate est insensible à la PME, en y ajoutant aussi de la pectine
b) incubation du mélange pâte/PME/pectine ;
c) optionnellement inactivation de la PME
d) addition d'un hydrocolloide et agitation.

2. Procédé selon la revendication 1, dans lequel la pectine et la pectine méthylestérase ajoutées sont substantiellement sans enzymes de dépolymérisation de la pectine.

3. Procédé selon les revendications 1 ou 2, dans lequel, à la fin du procédé, la valeur de buvard d'une pâte ayant une valeur Brix < 10 et un G' > 900 Pa est < 10 mm.

4. Procédé selon les revendications 1 ou 2, dans lequel, à la fin du procédé, la valeur de buvard d'une pâte ayant une valeur Brix < 10 et un G' > 900 Pa est < 5 mm.

5. Procédé selon l'une quelconque des revendications de 1 à 4 dans lequel la pectine méthylestérase provient d'un légume, d'un fruit ou d'un mélange de ceux-ci.

6. Procédé selon l'une quelconque des revendications de 1 à 5 dans lequel la pectine provient d'un légume, d'un fruit ou d'un mélange de ceux-ci.

7. Procédé selon la revendication 6 dans lequel la pectine est sous la forme d'un sérum extrait d'une pâte de fruits ou de légumes sensible à la pectine méthylestérase.

8. Procédé selon l'une quelconque des revendications de 1 à 7, dans lequel l'hydrocolloïde est choisi parmi l'amidon et les dérivés de celui-ci, les dérivés de la cellulose, la pectine, l'alginate, les carraghénanes, l'agar-agar, la gélatine, la gomme gellane, la gomme de guar, la farine de graines de caroube, la caséine, et les matériaux connexes tels que les sérums de pâtes de fruits et de légumes.

9. Procédé selon l'une quelconque des revendications de 1 à 8, dans lequel l'hydrocolloide est un hydrocolloide contenant de la pectine.

10. Procédé selon la revendication 9, dans lequel l'hydrocolloïde contenant de la pectine est obtenu à partir d'un sérum de pâte de tomate.
